## Europäisches Patentamt

(19) **European Patent Office**

**Office européen des brevets**

(11) Numéro de publication: **0 072 758**
**B1**

---

(12) # FASCICULE DE BREVET EUROPEEN

(45) Date de publication du fascicule du brevet:
**08.10.86**

(51) Int. Cl.⁴: **A 23 L 1/04,** A 21 D 13/08

(21) Numéro de dépôt: **82401534.1**

(22) Date de dépôt: **13.08.82**

---

(54) **Composition comestible gélifiée de consistance ferme pour produit de boulangerie à conservation prolongée et procédé pour sa fabrication.**

---

(30) Priorité: **18.08.81 US 293924**

(43) Date de publication de la demande:
**23.02.83 Bulletin 83/8**

(45) Mention de la délivrance du brevet:
**08.10.86 Bulletin 86/41**

(84) Etats contractants désignés:
**BE DE FR GB IT**

(56) Documents cités:
**DE - A - 2 420 622**
**FR - A - 2 241 183**
**FR - A - 2 274 222**
**US - A - 3 119 697**
**US - A - 3 493 382**
**US - A - 3 892 871**

Le dossier contient des informations techniques présentées postérieurement au dépôt de la demande et ne figurant pas dans le présent fascicule.

(73) Titulaire: **NABISCO BRANDS INC., Nabisco Brands Plaza, Parsippany New Jersey 07054 (US)**

(72) Inventeur: **Vanderveer, Fred, 61 Glenmere Terrace, Mahwah New Jersey 07430 (US)**
Inventeur: **Knipper, Aloysius J., 227 Cupsaw Drive, Ringwood New Jersey 07456 (US)**
Inventeur: **Straka, Robert, 2 Reynolds Road, Pequannock New Jersey 07440 (US)**
Inventeur: **Squicciarini, Alex J., 40-18 Brookside Avenue, Fairlawn New Jersey 07410 (US)**

(74) Mandataire: **Bonnetat, Christian et al, Cabinet PROPI Conseils 23 rue de Léningrad, F-75008 Paris (FR)**

---

ACTORUM AG

## Description

La présente invention est relative à une composition ou formulation et à un procédé au moyen desquels on peut fabriquer et incorporer à une pâte de base un ingrédient sous forme de gelée de saveur relativement neutre pour la préparation de produits comestibles tendres cuits au four, en particulier des galettes tendres dans des variétés telles que des tuiles au chocolat, au beurre de cacahuètes, à la mélasse, etc....; ces produits tendres, comestibles, cuits au four ayant une durée de conservation prolongée dont la longueur est surprenante.

D'une façon plus particulière, les matières premières préférées utilisées pour préparer la gelée de saveur neutre, dans les proportions et de la façon décrite de manière plus détaillée ci-après, comprennent un sirop de maïs à haute teneur en fructose, de la glycérine, une gomme alginate, du sulfate de calcium dihydraté, et du propylène glycol.

Dans les galettes tendres et les gâteaux, on conserve habituellement une humidité, une mollesse et une fraîcheur adéquates en utilisant de la pâte de raisins secs ou autres pâtes de fruits incorporées à la pâte. Cependant, ces produits donnent à la pâte un parfum fruité qui peut être acceptable par exemple dans les galettes à la farine d'avoine et à la pomme ou aux raisins secs, et qui ne convient pas dans les galettes au chocolat doux, au beurre de cacahuètes, à la mélasse, ou autres variétés de gâteaux tendres ou de galettes non parfumées aux fruits.

L'invention a par conséquent pour but principal de fournir un produit de remplacement ou de substitution approprié des pâtes de raisins secs ou des pâtes de fruits ayant les propriétés désirées de saveur douce, de conservation, d'une teneur importante en humidité dans les produits cuits au four, de compatibilité avec les processus de mélange et de manipulation de la pâte, et des coûts comparables aux pâtes de fruits de la technique antérieure.

Un autre but de l'invention est de fournir un système gélifié de consistance ferme, constitué de cinq ingrédients essentiels, d'un caractère de conservation stable et qui puisse être emmagasiné dans des ensembles de transport fermés pendant des durées indéfinies et distribués ensuite à des points ou à des installations de cuisson pour la fabrication de galettes, de biscuits, gâteaux et analogues de texture tendre.

On connaît, dans la technique, des formulations de gels comestibles, mais elles sont habituellement basées sur un système aqueux et utilisées pour remplir des produits cuits au four, par exemple des pets-de-nonnes remplis de confiture et des rouleaux à la confiture qui sont décrits notamment dans le document US-A-3 352 688, qui décrit un gel de consistance légère à base aqueuse qui contient un alginate soluble dans l'eau qui est prétendu non gommeux et résistant à la chaleur et à la congélation. Ce document, caractéristique de la technique antérieure, concerne seulement le remplissage utilisé dans les produits cuits au four, et non pas la préparation d'une pâte à galettes de texture tendre conservant l'humidité.

Suivant un autre aspect caractéristique de la technique antérieure, le document US-A-3 342 612 décrit des gelées de dessert ayant la capacité de gélifier aux températures ambiantes, considérées comme particulièrement avantageuses dans les pays tropicaux ou sub-tropicaux, les régions à faible revenu dans lesquelles la réfrigération n'est souvent pas disponible. Dans ce cas encore, la gelée est basée sur un système aqueux qui dans cet exemple utilise de la carragénine pour préparer la gelée de dessert.

Suivant un autre aspect, on sait déjà mettre en œuvre un agent humidifiant tel que la glycérine dans la préparation du système de gelée. Les agents d'humidification ont bien entendu été utilisés depuis longtemps dans l'industrie des produits alimentaires, et plus particulièrement dans la préparation des produits alimentaires cuits au four. Une telle technique en rapport avec la présente invention est décrite dans le document US-A-3 656 967, dont on pense qu'il protège les produits de dessert ou de petit déjeuner connus dénommés «Pop-Tart» qui sont de façon caractéristique constitués d'un produit rempli de fruits, adapté pour être chauffé dans un gril classique pendant une à deux minutes, afin de réaliser un produit comestible ayant les qualités gustatives désirées, dans lequel le remplissage s'amollit jusqu'à un état plastique ou gélifié et la croûte présente une texture croquante fraîchement cuite au four. Bien que le produit en deux phases non cuit au four décrit dans cette technique antérieure soit dit avoir une durée d'emmagasinage de par exemple six (6) mois lorsqu'il est emballé de façon appropriée, les deux phases (pâte et remplissage) sont formulées d'une façon telle qu'à la suite du chauffage dans un gril, l'humidité est transférée de la pâte externe ou de la croûte vers la garniture à base de fruits qui de plus retient et augmente sa teneur en humidité, en partie á l'aide d'un agent hydrophile ou humidifiant tel que de la glycérine ou du sorbitol. On remarquera en particulier que dans ce produit en deux phases, on n'indique pas l'utilisation d'une telle gelée dans la pâte et effectivement le but de ce système de la technique antérieure est de produire une croûte qui soit croquante à la suite de sa cuisson au four et non pas à texture tendre comme dans la présente invention.

Dans un autre document de la technique antérieure, un produit comestible moulé (par exemple sous la forme d'un jouet d'enfant) peut contenir de la carragénine pour lier et/ou gélifier un système contenant du glycérol et/ou du propylène-glycol comme décrit dans le document US-A-3 493 382. Des produits comestibles peuvent ainsi être fabriqués à des températures de cuisson relativement basses, par exemple de 90 à 95 °C, ce qui les rend valables pour fabriquer un produit comestible, qu'un utilisateur, même enfant, peut facilement préparer en toute sécurité. De telles techniques sont bien entendu difficilement compatibles avec une production industrielle de volume important, à grande échelle, de galettes à texture tendre, telle qu'elle est envisagée suivant l'invention.

Dans un autre document de la technique antérieure (US-A-3 119 697), des produits de glaçage stabilisés sont préparés en utilisant un agent gélifiant à base d'agar agar ou d'agar modifié dans un système aqueux. Cette technique antérieure n'indique pas comment fabriquer des galettes cuites au four à texture tendre ayant une durée de conservation prolongée telle qu'envisagée suivant l'invention.

Selon l'invention, la composition gélifiée comestible de consistance ferme, est caractérisée en ce qu'elle est susceptible d'être moulue en vue de la fabrication de produits cuits de consistance tendre à partir d'une pâte, ladite composition gélifiée comportant un gel de consistance ferme formé d'un mélange de:

A) 100 parts en poids d'un liquide visqueux comestible;

B) de 0,25 à 4 parts en poids d'une gomme comestible susceptible d'être solidifiée par des ions calcium;

C) jusqu'à environ 7 parts en poids d'un agent dispersant et humidifiant pour ladite gomme comestible;

D) jusqu'à environ 4 parts en poids d'une source d'ions calcium pour solidifier ladite gomme, et

E) jusqu'à environ 3 parts en poids d'un agent dispersant et humidifiant pour ladite source d'ions calcium.

On remarquera que le document DE-A-2 420 622 décrit déjà des compositions gélifiables à base d'amidon soluble, d'alginate et de sels de calcium, susceptibles d'être cuites au four.

Avantageusement, le gel contenu dans ladite pâte se trouve sous forme de petits grains ou sous forme moulue. Ce gel peut être un mélange de sucre en poudre et de gel solide sous la forme de petits grains. Les petits grains, de préférence, présentent une granulométrie de l'ordre de 0,8 mm.

Par ailleurs, avantageusement, le liquide visqueux comestible est un sirop de maïs à haute teneur en fructose. Il est alors préférable que ladite gomme comestible soit un alginate de sodium, de potassium ou d'ammonium, que ledit agent humidifiant et dispersant comestible de ladite gomme soit de la glycérine, que ladite source comestible d'ions calcium soit un sulfate de calcium dihydraté, et que ledit agent humidifiant et dispersant pour ladite source d'ions calcium soit du propylène glycol.

Sur la base de 100 parts en poids de sirop de maïs à haute teneur en fructose, la gomme comestible est présente dans une quantité d'environ 0,25 à 4 parts en poids, l'agent humidifiant et dispersant pour ladite gomme est présent dans une quantité d'environ 2 à 7 parts en poids, la source d'ions calcium est présente dans une quantité d'environ 1 à 4 parts en poids et ledit agent humidifiant et dispersant pour la source d'ions est présent dans une quantité d'environ 0,5 à 3 parts en poids. Cette composition gélifiée comprend avantageusement environ 100 parts en poids de sirop de maïs à haute teneur en fructose, environ 1,25 part en poids d'alginate de sodium, 3 parts en poids de glycérine, environ 1,25 part en poids de sulfate de calcium dihydraté et environ 1 part en poids de propylène glycol.

Dans une forme de réalisation, la composition gélifiée comestible de consistance ferme selon l'invention est caractérisée en ce qu'elle est susceptible d'être moulue, en vue de la fabrication de produits cuits de consistance tendre à partir d'une pâte, et elle comporte un gel de consistance ferme formé d'un mélange de:

A) 100 parts en poids d'un liquide visqueux comestible;

B) de 0,25 à 4 parts en poids d'une gomme comestible susceptible d'être solidifiée par des ions calcium;

C) jusqu'à environ 7 parts en poids d'un agent dispersant et humidifiant pour ladite gomme comestible;

D) de 1 à 4 parts en poids d'une source d'ions calcium pour solidifier ladite gomme, et

E) jusqu'à environ 3 parts en poids d'un agent dispersant et humidifiant pour ladite source d'ions calcium, ladite gomme comestible et ladite source d'ions calcium étant un alginate de calcium et ledit agent dispersant et humidifiant pour ladite source d'ions calcium étant ledit agent dispersant et humidifiant pour ladite gomme.

Selon une autre forme de réalisation, la composition gélifiée comestible de consistance ferme, selon l'invention est caractérisée en ce qu'elle est susceptible d'être moulue en vue de la fabrication de produits cuits de consistance tendre à partir d'une pâte, et elle comporte un gel de consistance ferme formé d'un mélange de:

A) 100 parts en poids d'un liquide visqueux comestible;

B) de 0,25 à 4 parts en poids d'une gomme comestible susceptible d'être solidifiée par des ions calcium;

C) jusqu'à environ 7 parts en poids d'un agent dispersant et humidifiant pour ladite gomme comestible;

D) de 1 à 4 parts en poids d'une source d'ions calcium pour solidifier ladite gomme, et

E) jusqu'à environ 3 parts en poids d'un agent dispersant et humidifiant pour ladite source d'ions calcium, ledit liquide visqueux comestible et ledit agent dispersant et humidifiant pour ladite gomme étant la glycérine.

Pour la fabrication d'une composition gélifiée comestible, la présente invention prévoit de plus un procédé caractérisé en ce qu'on mélange ladite gomme comestible et ledit agent humidifiant et dispersant pour ladite gomme de façon à former un premier mélange à peu près uniforme, on rajoute ledit premier mélange audit liquide comestible visqueux pour former un second mélange à peu près uniforme, on mélange ladite source d'ions calcium avec ledit agent humidifiant et dispersant de ladite source pour former un troisième mélange à peu près uniforme, on mélange lesdits second et troisième mélanges pour former un quatrième mélange à peu près uniforme, on divise ledit quatrième mélange en portions et on laisse lesdites portions reposer et se solidifier en ladite composition gélifiée à consistance ferme comestible et susceptible d'être moulue.

L'invention concerne également un procédé de fabrication d'une pâte pour produits cuits de consistance tendre, caractérisé en ce que l'on mélange préalablement la composition gélifiée spécifiée ci-dessus, avec du sucre en poudre jusqu'à former des petits grains; on ajoute des édulcorants, un accélérateur et de l'eau; on mélange jusqu'à obtenir une consistance uniforme; et on mélange à de la farine et à de la levure pour former ladite pâte. Cette composition gélifiée peut être moulue avant addition des édulcorants, de l'accélérateur et de l'eau. De plus, ladite composition gélifiée moulue peut être mélangée avec les composants de pâte comportant de la farine pour former une pâte de consistance uniforme, la proportion de ladite composition gélifiée étant d'environ 2 à 50% en poids de ladite pâte.

Selon un autre aspect de l'invention, un procédé de fabrication d'une pâte pour produits cuits de consistance tendre, est caractérisé en ce que l'on mélange préalablement la composition gélifiée selon l'invention avec du sucre en poudre jusqu'à former des petits grains; on mélange lesdits petits grains avec les composants de pâte comportant de la farine pour former une pâte de consistance uniforme, la proportion desdits petits grains étant d'environ 2 à 50% en poids de ladite pâte.

Ainsi, selon l'invention, une composition de pâte pour galette ou autre gâteau, est caractérisée en ce qu'elle contient environ de 2 à 50% en poids de la composition gélifiée selon l'invention.

Par ailleurs, un produit cuit au four ayant une teneur en humidité, une texture tendre et une durée de conservation prolongée, est caractérisée en ce qu'il est préparé en mélangeant et en cuisant la composition de pâte telle que définie ci-dessus.

La pâte, de préférence lisse, est coupée ou autrement façonnée à la forme et aux dimensions de galettes ou autres gâteaux désirés d'une façon classique et est ensuite cuite au four suivant des processus classiques. On peut utiliser des températures de cuisson d'environ 160 à environ 230 °C. Les températures plus élevées nécessitent moins de temps pour la cuisson d'une forme donnée de pâte. Par exemple pour des galettes le temps peut être aussi court que six minutes et pour des gâteaux un temps d'environ dix-huit à vingt minutes peut être nécessaire. Les temps et les températures sont classiques et les boulangers compétents peuvent utiliser des temps quelconques appropriés et des températures compatibles avec les pratiques usuelles de bonne boulangerie.

Dans les exemples donnés ci-après, toutes les parties et pourcentages sont indiqués en poids à moins d'indication contraire.

EXEMPLE I

Formulation de la composition gélifiable ou conditionneur de pâte.

| Composant | Parties en poids pour cent parties | Kilos |
|---|---|---|
| Sirop de maïs à haute teneur en fructose | 93,90 | 906 |
| Glycérine | 2,82 | 27 |
| Gomme alginate de sodium* | 1,17 | 11 |
| Sulfate de calcium dihydraté | 1,17 | 11 |
| Propylène glycol | 0,94 | 9 |
| | 100,00 | 964 |

*Kelco Gel IV vendu par la firme des Etats-Unis Kelco Division Merck & Co, Inc, Clark, New Jersey.

Processus de mélange

Le sirop de maïs est ajouté dans un chaudron approprié et est refroidi ou maintenu à une température d'environ 21 °C. La gomme alginate de sodium et la glycérine sont pré-mélangées ou mélangées jusqu'à obtention d'une consistance épaisse analogue à un sirop, dépourvu de grumeaux, et le mélange alginate/glycérine est alors ajouté au sirop de maïs et mélangé avec celui-ci dans le chaudron pendant environ 15 minutes. Le sulfate de calcium dihydraté et le propylène glycol sont également pré-mélangés ou mélangés de façon à former une suspension versable dépourvue de grumeaux qui est alors ajoutée dans le chaudron et mélangée dans celui-ci jusqu'à incorporation uniforme (ceci nécessite environ 5 à 10 minutes). Le contenu du chaudron est alors versé directement dans des récipients de transport ou des conteneurs chemisés de matière plastique qui sont fermés de façon appropriée et on laisse ensuite le mélange gélifier et prendre. Les mélanges gélifiés dans les conteneurs sont alors empilés et emmagasinés ou expédiés. Le gel de consistance ferme peut ensuite être utilisé dans une phase de boulangerie pour la fabrication de galettes de consistance tendre (décrite ci-après) ou conservé pendant quelques temps et distribué ensuite aux emplacements d'utilisation ou installations de boulangerie.

EXEMPLE II

Fabrication de galettes de consistance tendre ayant une durée de conservation prolongée en utilisant la composition gélifiée de consistance ferme de l'exemple I ci-dessus.

| 1 - Formulation | Kilos |
|---|---|
| Farine de blé (panifiable) | 45 |
| Sucre cristalisé | 18 |
| Sirop inversé (SMHF)* | 4,5 |
| Accélérateur hydrogéné | 13,5 |
| Composition gélifiée (exemple I) | 11 |
| Levure | 0,650 |
| Eau | 4,5 |
| | 97,15 |

*Sirop de maïs à haute teneur en fructose.

Suivant le type de galette ou de gâteau de consistance tendre désiré, la formulation peut bien entendu contenir de la noix de coco, du chocolat, des grains de chocolat, de l'avoine, du beurre de cacahuète, des œufs, du lait, des raisins secs, des noix, des parfums artificiels et/ou naturels ou une variété d'autres ingrédients utilisés normalement dans la fabrication des galettes ou des gâteaux, le tout suivant des techniques bien connues.

2 – Mélange et processus de cuisson

La composition gélifiée à consistance ferme est dispersée sur le sucre cristallisé et mélangée jusqu'à ce que le gel soit sous forme de grains ayant un diamètre d'environ 0,8 mm. (En variante le gel peut être broyé dans un hachoir à produits alimentaires et ensuite mélangé avec le sucre, dans une variante de cette phase). Ensuite on ajoute à la préparation ci-dessus en mélangeant le sucre inverti, l'accélérateur et l'eau et on continue de mélanger jusqu'à obtenir une consistance lisse. La farine et la levure sont ajoutées à la préparation ci-dessus et mélangées pour former une pâte lisse. La pâte est coupée ou façonnée dans les dimensions des galettes ou des gâteaux désirés et est ensuite cuite à une température de 160 à environ 230°C pendant environ 6 minutes jusqu'à environ 18 ou 20 minutes. Les galettes obtenues au moyen de cette formulation et de ce processus de mélange et de cuisson ont une durée de conservation prolongée d'au moins 6 mois tout en conservant une teneur en humidité et une consistance tendre.

**Revendications**

1. Composition gélifiée comestible de consistance ferme, caractérisée en ce qu'elle est susceptible d'être moulue en vue de la fabrication de produits cuits de consistance tendre à partir d'une pâte, ladite composition gélifiée comportant un gel de consistance ferme formé d'un mélange de:

A) 100 parts en poids d'un liquide visqueux comestible;

B) de 0,25 à 4 parts en poids d'une gomme comestible susceptible d'être solidifiée par des ions calcium;

C) jusqu'à environ 7 parts en poids d'un agent dispersant et humidifiant pour ladite gomme comestible;

D) jusqu'à environ 4 parts en poids d'une source d'ions calcium pour solidifier ladite gomme, et

E) jusqu'à environ 3 parts en poids d'un agent dispersant et humidifiant pour ladite source d'ions calcium.

2. Composition gélifiée selon la revendication 1, caractérisée en ce que le gel contenu dans ladite pâte se trouve sous forme de petits grains ou sous forme moulue.

3. Composition gélifiée selon la revendication 1, caractérisée en ce que le gel contenu dans ladite pâte est un mélange de sucre en poudre et de gel solide sous la forme de petits grains.

4. Composition gélifiée selon la revendication 3, caractérisée en ce que les petits grains présentent une granulométrie de l'ordre de 0,8 mm.

5. Composition gélifiée selon la revendication 1, caractérisée en ce que le liquide visqueux comestible est un sirop de maïs à haute teneur en fructose.

6. Composition gélifiée selon la revendication 5, caractérisée en ce que ladite gomme comestible est un alginate de sodium, de potassium ou d'ammonium, ledit agent humidifiant et dispersant comestible de ladite gomme est de la glycérine, ladite source comestible d'ions calcium est un sulfate de calcium dihydraté, et ledit agent humidifiant et dispersant pour ladite source d'ions calcium est du propylène glycol.

7. Composition gélifiée comestible de consistance ferme, caractérisée en ce qu'elle est susceptible d'être moulue, en vue de la fabrication de produits cuits de consistance tendre à partir d'une pâte, ladite composition gélifiée comportant un gel de consistance ferme formé d'un mélange de:

A) 100 parts en poids d'un liquide visqueux comestible;

B) de 0,25 à 4 parts en poids d'une gomme comestible susceptible d'être solidifiée par des ions calcium;

C) jusqu'à environ 7 parts en poids d'un agent dispersant et humidifiant pour ladite gomme comestible;

D) de 1 à 4 parts en poids d'une source d'ions calcium pour solidifier ladite gomme, et

E) jusqu'à environ 3 parts en poids d'un agent dispersant et humidifiant pour ladite source d'ions calcium, ladite gomme comestible et ladite source d'ions calcium étant un alginate de calcium et ledit agent dispersant et humidifiant pour ladite source d'ions calcium étant ledit agent dispersant et humidifiant pour ladite gomme.

8. Composition gélifiée comestible de consistance ferme, caractérisée en ce qu'elle est susceptible d'être moulue en vue de la fabrication de produits cuits de consistance tendre à partir d'une pâte, ladite composition gélifiée comportant un gel de consistance ferme formé d'un mélange de:

A) 100 parts en poids d'un liquide visqueux comestible;

B) de 0,25 à 4 parts en poids d'une gomme comestible susceptible d'être solidifiée par des ions calcium;

C) jusqu'à environ 7 parts en poids d'un agent dispersant et humidifiant pour ladite gomme comestible;

D) de 1 à 4 parts en poids d'une source d'ions calcium pour solidifier ladite gomme, et

E) jusqu'à environ 3 parts en poids d'un agent dispersant et humidifiant pour ladite source d'ions calcium, ledit liquide visqueux comestible et ledit agent dispersant et humidifiant pour ladite gomme étant la glycérine.

9. Composition gélifiée selon la revendication 6, caractérisée en ce que sur la base de 100 parts en poids de sirop de maïs à haute teneur fructose, la gomme comestible est présente dans une quantité d'environ 0,25 à 4 parts en poids, l'agent humidifiant et dispersant pour ladite gomme est présent dans une quantité d'environ 2 à 7 parts en poids, la source d'ions calcium est présente dans une quantité d'environ 1 à 4 parts en poids et ledit agent humidifiant et dispersant pour la source d'ions est présent dans une quantité d'environ 0,5 à 3 parts en poids.

10. Composition gélifiée selon la revendication 9, caractérisée en ce qu'elle comprend environ 100 parts en poids de sirop de maïs à haute teneur en fructose, environ 1,25 part en poids d'alginate de sodium, 3 parts en poids de glycérine, environ 1,25 part en poids de sulfate de calcium dihydraté et environ 1 part en poids de propylène glycol.

11. Procédé de fabrication d'une composition gélifiée comestible telle que spécifiée sous l'une des revendications 1, 7 ou 8, caractérisé en ce qu'on mélange ladite gomme comestible et ledit agent humidifiant et dispersant pour ladite gomme de façon à former un premier mélange à peu près uniforme, on rajoute ledit premier mélange audit liquide comestible visqueux pour former un second mélange à peu près uniforme, on mélange ladite source d'ions calcium avec ledit agent humidifiant et dispersant de ladite source pour former un troisième mélange à peu près uniforme, on mélange lesdits second et troisième mélanges pour former un quatrième mélange à peu près uniforme, on divise ledit quatrième mélange en portions et on laisse lesdites portions reposer et se solidifier en ladite composition gélifiée à consistance ferme comestible et susceptible d'être moulue.

12. Procédé de fabrication d'une pâte pour produits cuits de consistance tendre, caractérisé en ce que l'on mélange préalablement la composition gélifiée spécifiée sous l'une des revendications 1, 7 ou 8, avec du sucre en poudre jusqu'à former des petits grains; on ajoute des édulcorants, accélérateur et de l'eau; on mélange jusqu'à obtenir une consistance uniforme; et on mélange à de la farine et à de la levure pour former ladite pâte.

13. Procédé de fabrication d'une pâte pour produits cuits de consistance tendre, caractérisé en ce que l'on moud la composition gélifiée solide spécifiée sous l'une des revendications 1, 7 ou 8, on ajoute des édulcorants, accélérateur et de l'eau; on mélange jusqu'à obtenir une consistance uniforme; et on mélange à de la farine et à de la levure pour former ladite pâte.

14. Procédé de fabrication d'une pâte pour produits cuits de consistance tendre, caractérisé en ce que l'on moud la composition gélifiée solide spécifiée sous l'une des revendications 1, 7 ou 8; on mélange ladite composition avec les composants de pâte comportant de la farine pour former une pâte de consistance uniforme, la proportion de ladite composition gélifiée étant d'environ 2 à 50% en poids de ladite pâte.

15. Procédé de fabrication d'une pâte pour produits cuits de consistance tendre, caractérisé en ce que l'on mélange préalablement la composition gélifiée spécifiée sous l'une des revendications 1, 7 ou 8 avec du sucre en poudre jusqu'à former des petits grains; on mélange lesdits petits grains avec les composants de pâte comportant de la farine pour former une pâte de consistance uniforme, la proportion desdits petits grains étant d'environ 2 à 50% en poids de ladite pâte.

16. Composition de pâte pour galette ou autre gâteau, caractérisée en ce qu'elle contient environ de 2 à 50% en poids de la composition gélifiée telle que spécifiée sous l'une des revendications 1, 7 ou 8.

17. Produit cuit au four ayant une teneur en humidité, une texture tendre et une durée de conservation prolongée, caractérisé en ce qu'il est préparé en mélangeant et en cuisant la composition de pâte telle que définie sous la revendication 16.

**Claims**

1. An edible firm gel composition, characterized in that it is capable of being ground for producing soft-textured baked products from a dough, said gel composition comprising a firm gel formed from a mixture of:

A) 100 weight parts of an edible viscous liquid;

B) from 0.25 to 4.0 weight parts of an edible gum capable of being set by calcium ions;

C) up to about 7 weight parts of a humectant-dispersing agent for said edible gum;

D) up to about 4 weight parts of a calcium ion source for setting said gum, and

E) up to about 3 weight parts of a humectant-dispersing agent for said source of calcium ions.

2. The gel composition of claim 1, characterized in that the gel contained in said dough is in beadlet or ground form.

3. The gel composition of claim 1, characterized in that the gel contained in said dough is a mixture of granulated sugar and set gel in the form of beadlets.

4. The gel composition of claim 3, characterized in that the beadlets are approximately 0.8 mm diameter.

5. The gel composition of claim 1, characterized in that the edible viscous liquid is a high-fructose corn syrup.

6. The gel composition of claim 5, characterized in that said edible gum is sodium, potassium or ammonium alginate, said edible humectant-dispersing agent for said gum is glycerine, said edible source of calcium ions is calcium sulfate dihydrate, and said humectant-dispersing agent for said calcium ion source is propylene glycol.

7. An edible firm gel composition, characterized in that it is capable of being ground for producing soft-textured baked products from a dough, said gel composition comprising a firm gel formed from a mixture of:
   A) 100 weight parts of an edible viscous liquid;
   B) from 0.25 to 4.0 weight parts of an edible gum capable of being set by calcium ions;
   C) up to about 7 weight parts of a humectant-dispersing agent for said edible gum;
   D) from 1 to 4 weight parts of a calcium ion source for setting said gum, and
   E) up to about 3 weight parts of a humectant-dispersing agent for said source of calcium ions, said edible gum and said source of calcium ions being calcium alginate and said edible humectant-dispersing agent for said source of calcium ions being said edible humectant-dispersing agent for said gum.

8. An edible firm gel composition, characterized in that it is capable of being ground for producing soft-textured baked products from a dough, said gel composition comprising a firm gel formed from a mixture of:
   A) 100 weight parts of an edible viscous liquid;
   B) from 0.25 to 4.0 weight parts of an edible gum capable of being set y calcium ions;
   C) up to about 7 weight parts of a humectant-dispersing agent for said edible gum;
   D) from 1 to 4 weight parts of a calcium ion source for setting said gum, and
   E) up to about 3 weight parts of a humectant-dispersing agent for said source of calcium ions, said edible viscous liquid and said edible humectant-dispersing agent for said gum being glycerin.

9. The gel composition of claim 6, characterized in that, based on 100 weight parts of said high-fructose corn syrup, the edible gum is present in an amount of about 0.25 to about 4.0 weight parts, the humectant-dispersing agent for said gum is present in the amount of about 2 to 7 weight parts, the calcium ion source is present in the amount of about 1 to 4 weight parts, and said humectant-dispersing agent for the ion source is present in the amount of 0.5 to 3 weight parts.

10. The gel composition of claim 9, characterized in that it comprises about 100 weight parts of high fructose corn syrup, about 1.25 weight parts of sodium alginate, 3 weight parts of glycerine, about 1.25 weight parts of calcium sulfate dihydrate, and about 1 weight part of propylene glycol.

11. Method of making the edible gel composition of one of claims 1, 7 or 8, characterized in that one mixes said edible gum and said humectant-dispersing agent for said gum to form a substantially uniform first blend, one mixes said first blend with said edible viscous liquid to form a substantially uniform second blend, one mixes said calcium ion source with said humectant-dispersing agent for said source to form a substantially uniform third blend, one mixes said second and third blends to form a substantially uniform fourth blend, one divides said fourth blend into portions; and one allows said portions to stand and set into said edible firm gel composition capable of being ground.

12. Method of making dough for soft-textured baked products, characterized in that one premixes the firm gel composition of one of claims 1, 7 or 8 with granulated sugar until beadlets form, one adds sweeteners, shortening and water, one mixes until a smooth consistency results, and one blends in flour and baking poweder to form said dough.

13. Method of making dough for soft-textured baked products, characterized in that one grinds the firm gel composition of one of claims 1, 7 or 8, one adds sweeteners, shortening and water, one mixes until a smooth consistency results, and one blends in flour and backing powder to form said dough.

14. Method of making dough for soft-textured baked products, characterized in that one grinds the firm gel composition of one of claims 1, 7 or 8, one mixes said composition with dough ingredients including flour to form a dough of smooth consistency, the amount of said gel composition being about 2 to 50 weight percent of said dough.

15. Method of making dough for soft-textured baked products, characterized in that one premixes the firm gel composition of one of claims 1, 7 or 8 with granulated sugar until beadlets form, one mixes said beadlets with dough ingredients including flour to form a dough of smooth consistency, the amount of said beadlets being about 2 to 50 weight percent of said dough.

16. Soft cookie or snack dough composition, characterized in that it contains about 2 to 50 weight percent of the gel composition claimed in one of claims 1, 7 or 8.

17. Baked product having a moist, soft-texture and an extended shelf-life, characterized in that it is prepared by shaping and baking the dough composition claimed in claim 16.

**Patentansprüche**

1. Essbare feste Gel-Zusammensetzung, dadurch gekennzeichnet, dass sie ausgehend von einem Teig zur Herstellung von Backwaren weicher Beschaffenheit gemahlen werden kann und ein Gel fester Beschaffenheit aufweist, das sich wie folgt zusammensetzt:
   A) 100 Gewichtsteile einer viskosen essbaren Flüssigkeit;

B) von 0,25 bis 4 Gewichtsteile eines essbaren Gummis, das durch Kalziumionen verfestigt werden kann;

C) bis zu etwa 7 Gewichtsteile eines Feuchthalte-Dispergiermittels für das essbare Gummi;

D) bis zu etwa 4 Gewichtsteile einer Kalziumionenquelle zum Verfestigen des Gummis und

E) bis zu etwa 3 Gewichtsteile eines Feuchthalte-Dispergiermittels für die Kalziumionenquelle.

2. Gel-Zusammensetzung nach Anspruch 1, dadurch gekennzeichnet, dass das im Teig enthaltene Gel in Körnchenform oder gemahlen vorliegt.

3. Gel-Zusammensetzung nach Anspruch 1, dadurch gekennzeichnet, dass das im Teig enthaltene Gel ein Gemisch aus Puderzucker und festem Gel in feiner Körnchenform darstellt.

4. Gel-Zusammensetzung nach Anspruch 3, dadurch gekennzeichnet, dass die Körnchengrösse bei annähernd 0,8 mm Durchmesser liegt.

5. Gel-Zusammensetzung nach Anspruch 1, dadurch gekennzeichnet, dass als essbare viskose Flüssigkeit ein an Fruchtzucker reichhaltiger Maissirup verwendet wird.

6. Gel-Zusammensetzung nach Anspruch 5, dadurch gekennzeichnet, dass als essbarer Gummi Natrium-, Kalium- oder Ammonium-Alginat, als essbares Feuchthalte- und Dispergiermittel für das Gummi Glyzerin, als essbare Kalziumionenquelle Kalziumsulfatdihydrat und als Feuchthalte- und Dispergiermittel für die Kalziumionenquelle Propylenglykol verwendet werden.

7. Essbare feste Gel-Zusammensetzung, dadurch gekennzeichnet, dass sie zur Herstellung von Backwaren weicher Beschaffenheit aus einem Teig gemahlen werden kann und ein Gel fester Beschaffenheit aufweist, das sich wie folgt zusammensetzt:

A) 100 Gewichtsteile einer viskosen essbaren Flüssigkeit;

B) von 0,25 bis 4 Gewichtsteile eines essbaren Gummis, das durch Kalziumionen verfestigt werden kann;

C) bis zu etwa 7 Gewichtsteile eines Feuchthalte-Dispergiermittels für das essbare Gummi;

D) von 1 bis 4 Gewichtsteile einer Kalziumionenquelle zum Verfestigen des Gummis und

E) bis zu etwa 3 Gewichtsteile eines Feuchthalte-Dispergiermittels für die Kalziumionenquelle, wobei als essbares Gummi und Kalziumionenquelle Kalziumalginat und als Feuchthalte-Dispergiermittel für die Kalziumionenquelle das essbare Feuchthalte-Dispergiermittel für das Gummi verwendet wird.

8. Essbare feste Gel-Zusammensetzung, dass sie ausgehend von einem Teig zu Herstellung von Backwaren weicher Beschaffenheit gemahlen werden kann und ein Gel fester Beschaffenheit aufweist, das sich wie folgt zusammensetzt:

A) 100 Gewichtsteile einer viskosen essbaren Flüssigkeit;

B) von 0,25 bis 4 Gewichtsteile eines essbaren Gummis, das durch Kalziumionen verfestigt werden kann;

C) bis zu etwa 7 Gewichtsteile eines Feuchthalte-Dispergiermittels für das essbare Gummi;

D) von 1 bis 4 Gewichtsteile einer Kalziumionenquelle zum Verfestigen des Gummis und

E) bis zu 3 Gewichtsteile eines Feuchthalte-Dispergiermittels für die Kalziumionenquelle, wobei als viskose essbare Flüssigkeit und essbares Feuchthalte-Dispergiermittel für das Gummi Glyzerin verwendet wird.

9. Gel-Zusammensetzung nach Anspruch 6, dadurch gekennzeichnet, dass auf der Grundlage von 100 Gewichtsteilen des an Fruchtzucker reichhaltigen Maissirups das essbare Gummi in einer Höhe von etwa 0,25 bis etwa 4 Gewichtsteilen, das Feuchthalte-Dispergiermittel für das Gummi in einer Höhe von etwa 2 bis 7 Gewichtsteilen, die Kalziumionenquelle in einer Höhe von etwa 1 bis 4 Gewichtsteilen und das Feuchthalte-Dispergiermittel für die Ionenquelle in einer Höhe von 0,5 bis 3 Gewichtsteilen vorliegt.

10. Gel-Zusammensetzung nach Anspruch 9, dadurch gekennzeichnet, dass sie etwa 100 Gewichtsteile des an Fruchtzucker reichhaltigen Maissirups, etwa 1,25 Gewichtsteile Natriumalginat, 3 Gewichtsteile Glyzerin, etwa 1,25 Gewichtsteile Kalziumsulfatdihydrat und etwa 1 Gewichtsteil Propylenglykol aufweist.

11. Verfahren zum Herstellen der essbaren Gel-Zusammensetzung einer der vorhergehenden Ansprüche 1, 7 oder 8, dadurch gekennzeichnet, dass das essbare Gummi und das Feuchthalte-Dispergiermittel für das Gummi vermengt werden, um eine allgemein gleichförmige erste Mischung zu ergeben, die dann mit der essbaren viskosen Flüssigkeit vermengt wird, um eine zweite allgemein gleichförmige Mischung zu bilden, dass die Kalziumionenquelle mit dem Feuchthalte-Dispergiermittel für diese Quelle vermengt werden, um eine allgemein gleichförmige dritte Mischung zu ergeben, wobei die zweite und dritte Mischungen vermengt werden, um eine allgemein gleichförmige vierte Mischung zu ergeben, die portioniert wird, und dass diese Portionen abgestellt werden, um sich zu einer festen essbaren Gel-Zusammensetzung zu erhärten, die zum Mahlen geeignet ist.

12. Verfahren zum Herstellen eines Teigs für Backwaren weicher Beschaffenheit, dadurch gekennzeichnet, dass die feste Gel-Zusammensetzung nach einem der Ansprüche 1, 7 oder 8 mit Puderzucker solange vorgemischt werden, bis sich feine Körnchen bilden, dass hiernach Süssstoff, Backfett und Wasser beigemengt werden, wobei der Mischvorgang solange fortgesetzt wird, bis sich eine gleichförmige Konsistenz einstellt, und dass Mehl und Backpulver zum Bilden des Teigs beigemischt werden.

13. Verfahren zum Herstellen eines Teigs für Backwaren weicher Beschaffenheit, dadurch gekennzeichnet, dass die feste Gel-Zusammensetzung nach einem der Ansprüche 1, 7 oder 8 gemahlen, Süssmittel, Backfett und Wasser beigemengt und solange vermischt werden, bis sich eine gleichförmige Konsistenz einstellt, und dass Mehl sowie Backpulver zum Bilden des Teigs beigemischt werden.

14. Verfahren zum Herstellen eines Teigs für Backwaren weicher Beschaffenheit, dadurch gekennzeichnet, dass die feste Gel-Zusammensetzung nach einem der Ansprüche 1, 7 oder 8 gemahlen und dass diese Zusammensetzung mit den Teigbestandteilen aus Mehl zum Bilden eines Teigs gleichförmiger Konsistenz vermischt wird, wobei der Gewichtsanteil der Gel-Zusammensetzung bei etwa 2 bis 50% des Teigs liegt.

15. Verfahren zur Herstellung eines Teigs für Backwaren weicher Beschaffenheit, dadurch gekennzeichnet, dass die feste Gel-Zusammensetzung nach einem der Ansprüche 1, 7 oder 8 mit Pulverzucker vermischt wird, bis sich Körnchen bilden, die mit Teigingredientien einschliesslich Mehl zum Bilden eines Teigs gleichförmiger Konsistenz vermischt werden, wobei der Gewichtsanteil der Körnchen bei etwa 2 bis 50% des Teigs liegt.

16. Teigzusammensetzung für Weichkeckse oder Imbiss, gekennzeichnet durch einen Gewichtsanteil von etwa 2 bis 50% der Gel-Zusammensetzung nach den Ansprüchen 1, 7 oder 8.

17. Backerzeugnis von feuchter, weicher Beschaffenheit und langer Lagerfähigkeit, dadurch gekennzeichnet, dass es durch Formen und Bakken der Teigzusammensetzung nach Anspruch 16 vorbereitet und hergestellt wird.